# EUROPEAN PATENT APPLICATION

(11) **EP 2 998 168 A1**
(43) Date of publication of application: **23.03.2016**
(21) Application number: 14185133.7
(22) Date of filing: 17.09.2014
(51) Int. Cl.: B60R 19/48

(54) **Holder for a blind spot sensor system of a motor vehicle, a bumper valence of a motor vehicle and a method of mounting a blind spot sensor module to a motor vehicle**

(71) Applicant: Ford Global Technologies, LLC, Dearborn, MI 48126 (US)
(72) Inventor: Yilmaz, Selçuk Kubilay, Gölcük - Kocaeli (TR); Yilmaz, Zuhal Hacioglu, Gölcük - Kocaeli (TR); Yilmaz, Çaglar Mert, Üsküdar / Istanbul (TR); Ariöz, Melike Tandogan, 41670 Kocaeli (TR)
(74) Representative: Illing, Rolf

(57) **Abstract**

A holder according to the invention for a blind spot sensor module (2) of a motor vehicle comprises a mounting means (6) for the blind spot sensor module (2) and at least two connecting regions (4, 4', 4") arranged on mutually opposite sides of the mounting means (6) for fixing the holder (1) to a component of the motor vehicle, wherein the holder (1) is adapted for fixing to an inside of a bumper valence (10) of the motor vehicle. The invention also concerns a bumper valence of a motor vehicle and a method of mounting a blind spot sensor module (2) to a motor vehicle.

## Description

The invention concerns a holder for a blind spot sensor module of a motor vehicle having a mounting means for the blind spot sensor module and at least two connecting regions arranged on mutually opposite sides of the mounting means for fixing the holder to a component of the motor vehicle, a bumper valence of a motor vehicle and a method of mounting a blind spot sensor module to a motor vehicle.

For safely driving a motor vehicle it is necessary that the driver can have a complete view over the area in front of the motor vehicle in the direction of travel as well as regions which adjoin that region and from which for example other vehicles on a crossing path can pass into the region in front of the motor vehicle in the direction of travel. Frequently however that is not possible or is possible only to a limited extent as, in the space outside the vehicle, there are angle regions which the driver cannot view from the driving position. Such angle regions which are also referred to as a "blind spot" are to be found, in particular as viewed from the driving position, behind the pillars (A-, B-, C- and D-pillars) of the passenger cell and behind the tail region of the motor vehicle, which is hidden by the bodywork which is generally higher there. In addition there can be regions which can be difficult to view for example due to adjacent vehicles so that for example when a vehicle is coming out of a parking space in the reverse direction of that vehicle, other vehicles crossing behind the reversing vehicle can only be seen very late by the driver.

In order to reduce the risks of accident caused by blind spots, blind spot sensor systems are known which permit for example radar-assisted detection of obstacles in the region of a blind spot. Such a blind spot sensor system represents the assistance system which is offered under the designation BLIS (Blind Spot Information System) and which produces a warning signal for the driver when an obstacle or another vehicle is detected in the blind spot. Blind spot sensor systems usually have one or more blind spot sensor modules which make it possible to detect objects in blind spots and which for that purpose for example respectively comprise a sender and a detector which operate on the basis of the radar principle for object detection. For particularly efficient blind spot monitoring it is desirable for the blind spot sensor module to be disposed in a lower corner region of the bodywork of the motor vehicle. As the aspect of monitoring the blind spot in particular in the tail region of the motor vehicle is particularly important blind spot sensor modules are usually positioned at least in the region of the rear lower corners of the bodywork of a vehicle.

To fit the blind spot sensor module in the rear lower corner region of the bodywork of a vehicle it is known for the substantially plate-shaped blind spot sensor module to be mounted to a holder which is of a curved bracket-like configuration and which is fixed to the bodywork of the motor vehicle in such a way that the area which can be monitored by the blind spot sensor system extends laterally from and rearwardly of the motor vehicle. As further functional elements like for example ventilation openings are frequently disposed in the corner region in question of the bodywork, which for example can be disposed in a position constituting a downward prolongation of the D-pillar, the known holder is of such a configuration that the blind spot sensor module is held at a certain distance relative to the bodywork. Nonetheless the effectiveness of the ventilation openings can be restricted by the blind spot sensor module which partially covers them. In addition mounting the blind spot sensor module in that way requires a large number of relatively labour-intensive steps like for example fixing the holder to the bodywork with a plurality of screws; in addition the electrical connection from the blind spot sensor module to a control device of the blind spot sensor system has to be made before the holder is fitted to the motor vehicle bodywork. That involves a considerable degree of complication and effort when fitting out the motor vehicle.

The problem of the present invention is to provide a holder of the general kind set forth for a blind spot sensor module of a motor vehicle, a corresponding bumper valence and a method of mounting a blind spot sensor module to a motor vehicle, wherein the above-mentioned disadvantages are avoided as much as possible and in particular the assembly complication and effort is reduced.

That problem is solved by a holder for a blind spot sensor module, a bumper valence and a method, as are recited in the independent claims.

A holder according to the invention for a blind spot sensor module of a motor vehicle is adapted to hold the blind spot sensor module to a component of the motor vehicle. The component is in particular an element of the bodywork or another element of the external contour of the motor vehicle or a component which can be fitted to such an element. The holder is adapted in particular to hold the blind spot sensor module in a lower rear corner region of the motor vehicle. For that purpose the holder has a mounting means for the blind spot sensor module which is generally of a plate-shaped configuration and at least two connecting regions which are arranged on mutually opposite sides of the mounting means and which are adapted for fixing the holder to the component of the motor vehicle. The at least two connecting regions can be for example plate-shaped or of a flat configuration. The holder for example can comprise plastic material or metal or metal sheet.

The holder is so designed that the blind spot sensor module is held with its sensor side directed away from the bodywork of the motor vehicle so that the sensor means of the blind spot sensor module is oriented for detecting objects in the space outside the motor vehicle, in particular in a blind spot. The blind spot sensor module is preferably held in such a way that it operates through a bumper valence or skirt which is generally made from plastic material. In particular a blind spot sensor module which operates in the form of a radar system is not substantially impaired thereby in terms of its effectiveness. On the other hand the blind spot sensor module can be protected in that way from damage as can occur for example due to stones thrown up from the road surface.

According to the invention the holder is adapted for fixing to an inside of a bumper valence of the motor vehicle. Such a bumper valence is generally in the form of a component of extensive surface area, which is arranged in the region of a bumper of the motor vehicle or extends around the bumper and in particular forms the external contour of the motor vehicle in the front or rear lower region of the bodywork. The holder is in particular so designed that it can be fixed to the inside of the bumper valence, on the side of the holder that faces away from the vehicle bodywork, that is to say on the operative side of the sensor means of a blind spot sensor module held by the holder.

The fact that the holder is adapted for fixing to an inside of a bumper valence makes it possible for the holder to be fixed to the inside of the bumper valence before it is fitted to the bodywork of the motor vehicle. The holder can be so designed that the blind spot sensor module can be fitted into the mounting means of the holder before the latter is fixed to the inside of the bumper valence, or it can also be so designed that the blind spot sensor module can be fitted into the holder after the holder has been mounted in position. At any event that makes it possible for the bumper valence with the holder fixed thereto and the blind spot sensor module fitted into the holder to be mounted to the bodywork of the motor vehicle in a subsequent assembly step. That simplifies fitment of the blind spot sensor module and in addition it is possible to substantially avoid functional limitation in respect of functional elements arranged in the rear lower corner region of the bodywork. In particular it is possible to avoid a ventilation opening in that area being blocked by the blind spot sensor module.

In a preferred embodiment of the invention the at least two connecting regions are designed to be inclined relative to each other, wherein the connecting regions are part of a surface which is convexly curved in an outward direction, that is to say as viewed in the operative direction of the blind spot sensor module. The convexly mutually inclined arrangement of the at least two connecting regions corresponds to the concave configuration of the inside of the bumper valence in the corner region of the motor vehicle. That permits the holder and thus the blind spot sensor module to be fitted to the bumper valence in a particularly secure and space-saving fashion.

Preferably the holder has three connecting regions for fixing the holder to the inside of the bumper valence, the three connecting regions being disposed at the corners of a notional triangle which encloses the mounting means for the blind spot sensor module. That can allow the holder and the blind spot sensor module to be fixed in a particularly secure and simple fashion. In a particularly advantageous manner the three connecting regions are respectively convexly inclined relative to each other to permit them to be fitted to the inside of the bumper valence in the corner region thereof in a space-saving and secure fashion.

Preferably the connecting regions each have an adhesive surface for gluing the connecting region to a respective corresponding adhesive surface on the inside of the bumper valence. For fixing the holder to the bumper valence the adhesive surfaces of the connecting regions and/or the adhesive surfaces of the bumper valence can be provided for example with a liquid adhesive, preferably however with a double-sided adhesive tape, and they are then firmly connected together by being pressed against each other. That permits the holder to be fixed to the bumper valence in a particularly simple and reliable fashion.

Preferably the mounting means for fixing the blind spot sensor module is afforded by means of a snap-engagement fastening on the holder. In particular the mounting means can be adapted for insertion of the substantially plate-shaped, for example rectangular, blind spot sensor module, in such a way that it is held on one side with projections or lugs which are inserted into corresponding openings in the holder while on the other side with projections which are held in elastic resilient regions of the holder. That further simplifies fitment of the blind spot sensor module.

In addition it is advantageous for the holder to have at least two centring openings for centring the holder on corresponding centring projections on the inside of the bumper valence. That permits particularly simple and exact fitment of the holder and therewith the blind spot sensor module.

Preferably the holder is of a shallow tray-shaped configuration with raised edge flanges at its edges and in a central region, wherein the flanges which are raised in the central region extend around a central recess and form the mounting means for the blind spot sensor module. That makes it possible for the holder to be of a light, stable structure.

A bumper valence according to the invention is adapted for fixing a holder as described hereinbefore for a blind spot sensor module. In particular in a corner region at its inside a bumper valence according to the invention has a plurality of adhesive surfaces arranged for making an adhesive join with the corresponding adhesive surfaces on the described holder, and preferably at least two centring projections corresponding to the corresponding centring openings in the holder, and further preferably a cable harness for management of a supply cable for the blind spot sensor module. Advantageously the bumper valence is made of plastic material at least in a region which is in opposite relationship to the operative side of the blind spot sensor module and through which the sensor means of the blind spot sensor module operates in order on the one hand to protect the blind spot sensor module from damage but on the other hand not to substantially restrict its effectiveness. Further preferably the bumper valence is designed both in a left-hand and a right-hand corner region for fixing a respective holder according to the invention for a respective blind spot sensor module, in particular in an approximately symmetrical fashion, for which purpose it is possible to provide two holders which are of an approximately mirror-symmetrical structure. That provides a bumper valence which permits simple secure fitment of the blind spot sensor module by means of the described holder and at the same time permits optimum arrangement of one or more blind spot sensor modules for detecting objects in blind spots of the motor vehicle.

According to a method according to the invention of mounting a blind spot sensor module, in a first step a holder designed as described hereinbefore and a bumper valence of a motor vehicle which in particular can be as described hereinbefore as well as a blind spot sensor module are provided. In a second step the holder is fixed to an inside of the bumper valence. Preferably, for that purpose adhesive surfaces on connecting regions of the holder and/or adhesive surfaces on the bumper valence are provided with an adhesive, for example with a double-sided adhesive tape. In addition the holder is centred in a position in which the adhesive surfaces of the holder and those of the bumper valence correspond to each other preferably by means of centring projections which engage into corresponding centring openings of the holder, on the inside of the bumper valence, and the adhesive surfaces of the holder are pressed against the adhesive surfaces on the bumper valence.

Then in a third step, possibly after fitment and/or the connection of further functional elements connected to the bumper valence, the bumper valence is fitted to the bodywork of the motor vehicle. Depending on the respective configuration of the holder the blind spot sensor module is fitted into the mounting means of the holder between the first and the second steps or between the second and the third steps. In addition a cable laid in the bumper valence can be connected to the blind spot sensor module prior to the third step, by making a plug-in connection.

The invention is described in greater detail by way of example hereinafter with reference to the drawings in which:
- Figure 1: shows an embodiment of a holder according to the invention viewed from the outside,
- Figure 2: shows the holder of Figure 1 viewed from the inside and fixed to the inside of a bumper valence, and
- Figure 3: shows the holder as shown in Figure 2 but in the form of a transparent view on an enlarged scale.

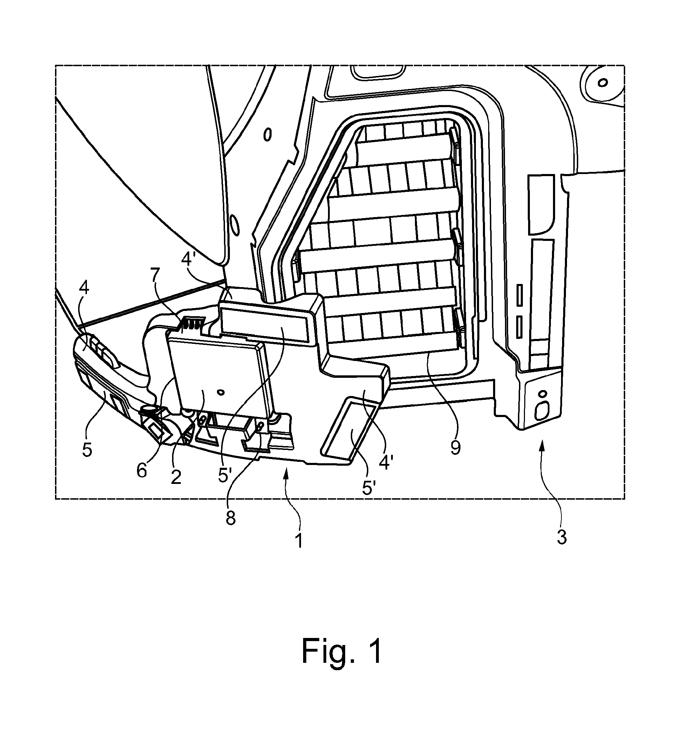

As shown by way of example in Figure 1 the holder 1 for the blind spot sensor module 2 is of a convexly curved configuration over its surface extent, on its side which faces away from the bodywork 3 of the motor vehicle and which is the operative side of the blind spot sensor module 2. On three sides of the blind spot sensor module 2 the holder 1 has connecting regions 4, 4', 4" which each carry a respective adhesive surface 5, 5', 5". The adhesive surfaces 5, 5', 5" are inclined relative to each other to correspond to the convex curvature of the outside of the holder 1. The adhesive surfaces 5, 5', 5" are respectively covered entirely or partially with a double-sided adhesive tape. The blind spot sensor module 2 is of a substantially rectangular plate-shaped configuration and is fitted into a correspondingly shaped, substantially rectangular recess 6 in the holder 1, which is disposed largely within a triangle formed by the connecting regions 4, 4', 4" or the adhesive surfaces 5, 5', 5". The blind spot sensor module 2 is held in the inserted position by projections 7 engaging into corresponding openings in the holder 1 and by lugs 8.

The holder 1 is held in its mounted position in the rear lower corner region of the bodywork 3, as shown in Figure 1 for example in a right-hand rear lower corner region. In that region the bodywork 3 has a ventilation opening 9, in relation to which the holder 1 is held by the bumper valence or skirt 10 (not shown in Figure 1; see below) at such a spacing that the effect of the ventilation opening 9 is not adversely affected. In this case the blind spot sensor module 2 is held in such a way that the sensor means, that is to say the operative side of the blind spot sensor module 2, is directed away from the bodywork 3 and is arranged to detect objects in particular in the rear lateral region of the motor vehicle and behind the motor vehicle.

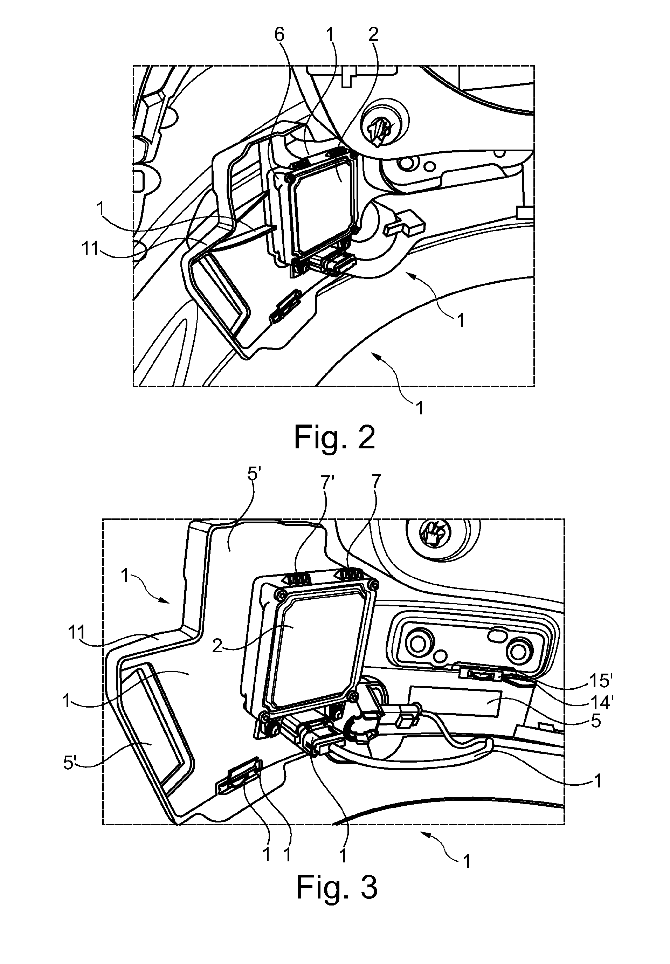

As can be seen from Figure 2 in which the holder is shown in its position of being fixed to the inside of the bumper valence 10, the holder 1, as viewed from the bodywork 3, is of a hollow configuration, more specifically being of a shallow tray-shaped configuration with a raised edge flange 11. That makes it possible for the holder to be of a stiff structure which saves on weight. The stiffness of the holder 1 can be increased by reinforcing ribs 12. The mounting means 6 for the blind spot sensor module 2 is also formed by raised edge flanges 13 which extend around a corresponding recess in the holder 1.

The enlarged view in Figure 3 shows the holder 1, like Figure 2, in a position of being fixed to the inside of the bumper valence 10, the holder 1 with the edge flanges 11 and the reinforcing ribs 12 being shown as transparent. The adhesive surfaces 5, 5', 5" with which the holder 1 is fixed to the bumper valence 10 are marked in Figure 3 by oval lines, like also the centring openings 14, 14' in the holder 1, with which the holder 1 is fitted on to the centring projections 15, 15' of the bumper valence 10. Figure 3 further shows that the power supply and signal cable 16 guided on the bumper valence 10 is connected to the blind spot sensor module 2 by way of a plug connector 17.

For mounting the blind spot sensor module 2 it is firstly fitted into the holder 1 and held there by the projections 7, 7' and the lugs 8 (see Figures 1 and 3). The holder 1 is then fitted with the centring openings 14, 14' on to the centring projections 15, 15' on the bumper valence 10 and the adhesive surfaces 5, 5', 5" previously fitted with double-sided adhesive tape are pressed against corresponding adhesive surfaces on the bumper valence 10. Alternatively the holder 1 can firstly be fixed in the described manner to the inside of the bumper valence 10 and thereafter the blind spot sensor module 2 can be fitted into the holder 1 from the side which then is still freely accessible, namely the side of the holder 1, that is opposite to the adhesive surfaces 5, 5', 5". The power supply and signal cable 16 which is guided at the inside of the bumper valence 10 is connected to the blind spot sensor module 2 by way of the plug connector 17 (see Figure 3). Finally the bumper valence 10 with the holder 1 fixed to its inside and the blind spot sensor module 2 fitted therein is mounted to the bodywork 3 of the motor vehicle. In that way the blind spot sensor module 2 is held in the position shown in Figure 1 in the right-hand rear lower corner region of the bodywork 3 of the motor vehicle to permit the detection of objects in blind spots on the right-hand side and behind the motor vehicle.

For the sake of clarity of the drawings not all references are shown in all the Figures. References which are not described in relation to a Figure bear the same significance as in the other Figures.

### List of references

- 1: holder
- 2: blind spot sensor module
- 3: bodywork
- 4, 4', 4": connecting region
- 5, 5', 5": adhesive surface
- 6: mounting means
- 7, 7': projection
- 8: lug
- 9: ventilation opening
- 10: bumper valence
- 11: edge flange
- 12: reinforcing rib
- 13: edge flange
- 14, 14': centring opening
- 15, 15': centring projection
- 16: power supply and signal cable
- 17: plug connector

## Claims

1. A holder for a blind spot sensor module (2) of a motor vehicle comprising a mounting means (6) for the blind spot sensor module (2) and at least two connecting regions (4, 4', 4") arranged on mutually opposite sides of the mounting means (6) for fixing the holder (1) to a component of the motor vehicle,
**characterised in**
**that** the holder (1) is adapted for fixing to an inside of a bumper valence (10) of the motor vehicle.

2. A holder according to claim 1
**characterised in**
**that** the at least two connecting regions (4, 4', 4") are convexly inclined relative to each other.

3. A holder according to one of the preceding claims
**characterised in**
**that** the holder (1) has three connecting regions (4, 4', 4") arranged at the corners of a notional triangle which encloses the mounting means (6) for the blind spot sensor module (2).

4. A holder according to one of the preceding claims
**characterised in**
**that** the connecting regions (4, 4', 4") each have a respective adhesive surface (5, 5', 5") for fixing to corresponding adhesive surfaces of the inside of the bumper valence (10).

5. A holder according to one of the preceding claims
**characterised in**
**that** the mounting means (6) is adapted for fixing the blind spot sensor module (2) to the holder (1) by means of a snap-engagement fastener.

6. A holder according to one of the preceding claims
**characterised in**
**that** the holder (1) has at least two centering openings (14, 14') for centering on corresponding centering projections (15, 15') on the inside of the bumper valence (10).

7. A holder according to one of the preceding claims
**characterised in**
**that** the holder (1) is of a shallow tray-shaped configuration with raised edge flanges (11, 13) at its edges and in a central region, wherein the raised edge flanges (13) in the central region form the mounting means (6) for the blind spot sensor module (2).

8. A bumper valence for a motor vehicle
**characterised in**
**that** in at least one corner region at its inside the bumper valence (10) has a plurality of adhesive surfaces for an adhesive join to the adhesive surfaces (5, 5', 5") of a holder (1) according to one of the preceding claims in conjunction with claim 4.

9. A method of mounting a blind spot sensor module (2) to a motor vehicle, wherein in a first step a holder (1) for the blind spot sensor module (2) according to one of claims 1 to 7, a bumper valence (10) and a blind spot sensor module (2) are provided, in a second step the holder (1) is fixed to an inside of the bumper valence (10) and in a third step the bumper valence (10) is mounted to a bodywork of the motor vehicle, wherein the blind spot sensor module (2) is fitted into the mounting means (6) of the holder (1) prior to the second or prior to the third step.
